# EUROPEAN PATENT APPLICATION

(11) **EP 4 686 150 A1**
(43) Date of publication of application: **28.01.2026**
(21) Application number: 23929264.2
(22) Date of filing: 29.03.2023
(51) Int. Cl.: H04L 9/40

(54) **DATA PROCESSING METHOD AND SYSTEM, AND NODE**

(71) Applicant: Huawei Technologies Co., Ltd., Shenzhen, Guangdong 518129 (CN)
(72) Inventor: WANG, Donghui, Shenzhen, Guangdong 518129 (CN); CHEN, Jing, Wuhan, Hubei 430072 (CN); LIU, Fei, Shenzhen, Guangdong 518129 (CN); LIANG, Xinyu, Wuhan, Hubei 430072 (CN)
(74) Representative: Thun, Clemens
(86) International application number: PCT/CN2023/084861
(87) International publication number: WO 2024/197666

(57) **Abstract**

This application relates to the field of blockchain technologies, and discloses a data processing method, a system, and a node. A control node, a receiving node, and a block management node belong to a same blockchain system. The control node may broadcast a blockchain including a cross-chain contract, where the cross-chain contract includes time information, and the time information indicates a reporting time point of state information of at least one parallel chain. State information of any parallel chain is submitted to the receiving node in a time period specified in the cross-chain contract. The receiving node sends the state information of the parallel chain to the block management node, and the block management node records the state information of the parallel chain in a relay chain, and broadcasts the relay chain. According to the data processing method, a delay of a cross-chain transaction in the blockchain system can be reduced.

## Description

### TECHNICAL FIELD

This application relates to the field of communication technologies, and in particular, to a data processing method, a system, and a node.

### BACKGROUND

As a distributed ledger technology, a blockchain technology has been applied to many fields due to openness, transparency, and immutability of the blockchain technology. If a transaction on a blockchain needs to be completed together with a sub-transaction on another blockchain, the transaction may be considered as a cross-chain transaction.

The cross-chain transaction involves transferring of cross-chain state information. The transferring of the cross-chain state information may be implemented based on a relay chain technology. For example, all relay node groups in a blockchain system jointly maintain one relay chain, and each relay node group records a state of a corresponding blockchain in the relay chain. The relay chain may be broadcast to all blockchains, and different blockchains can obtain states of the blockchains by querying the relay chain, to implement cross-chain state transferring.

However, each blockchain independently sends state information to a corresponding relay node group, and when to report the state information is determined by each parallel chain. As a result, state information that is of a blockchain and that is recorded in the relay chain may not be the latest, a blockchain cannot obtain real-time state information of another blockchain, and it is difficult to ensure transaction timeliness.

### SUMMARY

This application provides a data processing method, a system, and a node, to reduce a delay of a cross-chain transaction in a blockchain system.

According to a first aspect, an embodiment of this application provides a data processing method. The method is applied to a control node in a blockchain system, where the blockchain system further includes at least one receiving node group, and one receiving node group includes at least one receiving node. The method may be performed by a first communication apparatus. The first communication apparatus may be a control node or a unit, a function module, or the like inside the control node. For example, the first communication apparatus may be a chip disposed in the control node, or the first communication apparatus is another component configured to implement a function of the control node. The following describes the method provided in the first aspect by using an example in which the first communication apparatus is the control node.

The method includes: The control node determines a cross-chain contract, and broadcasts the cross-chain contract. The cross-chain contract includes time information, and the time information indicates a reporting time point of state information of at least one parallel chain. One parallel chain is a blockchain that establishes a connection to one receiving node group. The control node broadcasts the cross-chain contract.

In this solution, the control node may be disposed in the blockchain system, to specify the reporting time point of the state information of the at least one parallel chain in the blockchain system. The control node may broadcast the cross-chain contract, and broadcast the reporting time point of the state information of the at least one parallel chain by using the cross-chain contract. A device that stores the state information of the parallel chain in the blockchain system reports a state of the parallel chain within a time period specified in the cross-chain contract. Because the reporting time point of the state information of the parallel chain may be restricted by using the cross-chain contract, correspondingly, each node in the blockchain system may report, based on the cross-chain contract, latest state information of the at least one parallel chain before a specified reporting time point. According to the method, a delay caused because obtained state information of a parallel chain is not the latest in a cross-chain transaction can be reduced. In addition, one parallel chain is a blockchain that establishes a connection to one receiving node group. To be specific, one blockchain only needs to establish a connection to one receiving node group, and may interact with other n blockchains that establish connections to the receiving node group. Therefore, there is no need to maintain block data of a plurality of blockchains, so that overheads are reduced.

In a possible implementation, the time information may include one time point, or the time information may include a plurality of time points, and each time point corresponds to one or more parallel chains. In other words, the time information may indicate one time point, or the time information may indicate a plurality of time points, and the plurality of time points indicate reporting time points of state information of one or more parallel chains. Reporting time points of state information of all parallel chains may be the same. In this case, the cross-chain contract may include one time point, and the state information of all the parallel chains may be reported before the time point. Alternatively, reporting time points of state information of different parallel chains may be different. In this case, the cross-chain contract may include a plurality of time points, and each time point corresponds to one or more parallel chains.

In a possible implementation, that the control node determines the cross-chain contract includes: The control node receives information about the at least one parallel chain, and determines the cross-chain contract based on the information about the at least one parallel chain. The control node may determine an appropriate reporting time point of state information of each parallel chain based on the information about the parallel chain.

In a possible implementation, the method further includes: The control node broadcasts a first scheduling instruction, where the first scheduling instruction is used to group a receiving node in the blockchain system.

In the method, the control node may group the receiving nodes in the blockchain system, and one receiving node group corresponds to one parallel chain. Management on the parallel chain can be implemented by grouping the receiving nodes.

In a possible implementation, the method further includes: The control node determines that state information on a relay chain does not include state information of a first parallel chain, and broadcasts a second scheduling instruction, where the second scheduling instruction is used to regroup a receiving node group corresponding to the first parallel chain. A reporting time point of the state information on the relay chain meets the cross-chain contract. That the reporting time point of the state information on the relay chain meets the cross-chain contract is equivalent to that the reporting time point of the state information on the relay chain meets a time point specified in the time information included in the cross-chain contract.

If the state information on the relay chain does not include the state information of the first parallel chain, it indicates that transmission of the state information of the first parallel chain is interrupted. The interruption of transmission of the state information of the first parallel chain may be caused by interruption of a connection between the first parallel chain and the receiving node group. The control node regroups, by using the second scheduling instruction, the receiving node group corresponding to the first parallel chain, and may attempt to enable different receiving nodes to interact with the first parallel chain, to resume reporting of the state information of the first parallel chain.

In a possible implementation, the method further includes: The control node receives an admission application sent by a first receiving node, where the admission application is used to request to join a relay chain system. The control node allows the first receiving node to join the relay chain system, and records authorization information of the first receiving node. The first receiving node is any receiving node in the blockchain system.

In the method, that the receiving node joins the relay chain may be managed by the control node, and the control node maintains the relay chain, so that each node in the blockchain system can share information recorded in the relay chain. For example, the relay chain records authorization information of the receiving node, where the authorization information may be used for identity authentication and the like on the receiving node in a cross-chain transaction process.

In a possible implementation, the blockchain system further includes at least one block management node, and the block management node is configured to manage obtained state information of a parallel chain. The method further includes: The control node receives an admission application sent by a first block management node, where the admission application is used to request to join the relay chain system. The control node allows the first block management node to join the relay chain system, and records authorization information of the first block management node. The first block management node belongs to the at least one block management node.

The blockchain system further includes the block management node configured to manage the state information of the parallel chain. That the block management node joins the relay chain may be further managed by the control node, and a controller maintains the relay chain, so that each node in the blockchain system can perform identity authentication and the like on the block management node based on authorization information of the block management node.

According to a second aspect, an embodiment of this application provides a data processing method. The method is applied to a block management node in a blockchain system, where the blockchain system further includes a control node and at least one receiving node group, and one receiving node group includes at least one receiving node. The method may be performed by a second communication apparatus. The second communication apparatus may be a block management node or a unit, a function module, or the like inside the block management node. For example, the second communication apparatus may be a chip disposed in the block management node, or the second communication apparatus is another component configured to implement a function of the block management node. The following describes the method provided in the second aspect by using an example in which the second communication apparatus is the block management node.

The method includes: The block management node receives a cross-chain contract from the control node, where the cross-chain contract includes time information, the time information indicates a reporting time point of state information of at least one parallel chain, and one parallel chain is a blockchain that establishes a connection to one receiving node group. A first block management node receives state information of a plurality of parallel chains. The first block management node records the state information of the at least one parallel chain in a relay chain, and broadcasts the relay chain, where the reporting time point of the state information of the at least one parallel chain meets the cross-chain contract.

In the method, the first block management node may obtain the state information of the plurality of parallel chains from a plurality of receiving nodes. It is considered that a reporting time point of state information of a parallel chain may not meet the cross-chain contract, that is, the state information of the parallel chain may not be the latest. Therefore, the first block management node may record, in the relay chain, state information of at least one parallel chain that meets the cross-chain contract, and then broadcast the relay chain. In this way, parallel chains can obtain latest state information of each other, so that a delay in a cross-chain transaction can be reduced.

In a possible implementation, the time information may include one time point, or the time information may include a plurality of time points, and each time point corresponds to one or more parallel chains. In other words, the time information may indicate one time point, or the time information may indicate a plurality of time points, and the plurality of time points indicate reporting time points of state information of one or more parallel chains.

In a possible implementation, the method further includes: The first block management node sends an admission application to the control node, where the admission application is used to request to join a relay chain system. The first block management node receives authorization information that is of the first block management node and that is sent by the control node. The authorization information may indicate that the control node allows the first block management node to join the relay chain system.

For beneficial effects of the second aspect and the implementations, refer to the beneficial effects of the first aspect and the implementations of the first aspect. Details are not described herein again.

According to a third aspect, an embodiment of this application provides a data processing method. The method is applied to any receiving node in a blockchain system, where the blockchain system further includes a control node and at least one receiving node group, and one receiving node group includes at least one receiving node. The method may be performed by a third communication apparatus. The third communication apparatus may be any receiving node or a unit, a function module, or the like inside any receiving node. For example, the third communication apparatus may be a chip disposed in the receiving node, or the third communication apparatus is another component configured to implement a function of any receiving node. The following describes the method provided in the third aspect by using an example in which the third communication apparatus is any receiving node.

The method includes: The receiving node receives a cross-chain contract from the control node, where the cross-chain contract includes time information, the time information indicates a reporting time point of state information of at least one parallel chain, and one parallel chain is a blockchain that establishes a connection to one receiving node group. The receiving node receives state information of a first parallel chain, where the first parallel chain is a blockchain that establishes a connection to a first receiving node group to which the receiving node belongs; and broadcasts the state information of the first parallel chain if the state information of the first parallel chain meets the time information included in the cross-chain contract.

In the method, the receiving node receives the state information of the first parallel chain, and may determine whether the state information of the first parallel chain meets the cross-chain contract. If the state information of the first parallel chain meets the cross-chain contract, the receiving node broadcasts the state information of the first parallel chain. This method facilitates maintenance of the parallel chain. In addition, one parallel chain is a blockchain that establishes a connection to one receiving node group. To be specific, one blockchain only needs to establish a connection to one receiving node group, and may interact with other n blockchains that establish connections to the receiving node group. Therefore, there is no need to maintain block data of a plurality of blockchains, so that overheads are reduced.

In a possible implementation, the method further includes: A first receiving node sends an admission application to the control node, where the admission application is used to request to join a relay chain system. The first receiving node receives authorization information that is of the first receiving node and that is sent by the control node. The authorization information may indicate that the control node allows the first receiving node to join the relay chain system.

In a possible implementation, the method further includes: The first receiving node receives a first scheduling instruction broadcast by the control node, where the first scheduling instruction is used to group a receiving node in the blockchain system. The first receiving node determines, based on the first scheduling instruction, that the first receiving node belongs to the first group of receiving nodes.

In a possible implementation, the method further includes: The first receiving node receives a second scheduling instruction broadcast by the control node, where the second scheduling instruction is used to regroup the first group of receiving nodes. The first receiving node determines, based on the second scheduling instruction, to establish a connection to a memory corresponding to a second receiving node group, where the first receiving node changes from originally belonging to the first receiving node group to belonging to the second receiving node group.

For beneficial effects of the third aspect and the implementations, refer to the beneficial effects of the first aspect and the implementations of the first aspect. Details are not described herein again.

According to a fourth aspect, an embodiment of this application further provides a node. For beneficial effects, refer to descriptions of the first aspect. Details are not described herein again. The apparatus has a function of implementing the behavior in the method instance in the first aspect. The function may be implemented by hardware, or may be implemented by hardware executing corresponding software. The hardware or the software includes one or more modules corresponding to the foregoing function. In a possible design, a structure of the apparatus includes a processing module and a transceiver module. These modules may perform corresponding functions in the foregoing method example in the first aspect. For details, refer to detailed descriptions in the method example. Details are not described herein again.

According to a fifth aspect, an embodiment of this application further provides a node. For beneficial effects, refer to descriptions of the second aspect. Details are not described herein again. The apparatus has a function of implementing the behavior in the method instance in the second aspect. The function may be implemented by hardware, or may be implemented by hardware executing corresponding software. The hardware or the software includes one or more modules corresponding to the foregoing function. In a possible design, a structure of the apparatus includes a processing module and a transceiver module. These modules may perform corresponding functions in the foregoing method example in the second aspect. For details, refer to detailed descriptions in the method example. Details are not described herein again.

According to a sixth aspect, an embodiment of this application further provides a node. For beneficial effects, refer to descriptions of the third aspect. Details are not described herein again. The apparatus has a function of implementing the behavior in the method instance in the third aspect. The function may be implemented by hardware, or may be implemented by hardware executing corresponding software. The hardware or the software includes one or more modules corresponding to the foregoing function. In a possible design, a structure of the apparatus includes a processing module and a transceiver module. These modules may perform corresponding functions in the foregoing method example in the third aspect. For details, refer to detailed descriptions in the method example. Details are not described herein again.

According to a seventh aspect, an embodiment of the present invention provides a node. The node includes a processor and a memory, and may further include a network adapter. The processor may invoke program instructions in the memory, so that a computing device can perform the method provided in the first aspect or any possible implementation of the first aspect, the method provided in the second aspect or any possible implementation of the second aspect, or the method provided in the third aspect or any possible implementation of the third aspect. The memory is coupled to the processor, and stores program instructions and data that are necessary for performing a data transmission method. A communication interface is configured to: communicate with another device, and perform data transmission, for example, provide state information of a parallel chain and provide a cross-chain contract.

According to an eighth aspect, this application provides a computer-readable storage medium, where the computer-readable storage medium stores computer program instructions. When the instructions are executed by a computing device, the computing device may perform the method in the first aspect or any possible implementation of the first aspect, the method in the second aspect or any possible implementation of the second aspect, or the method in the third aspect or any possible implementation of the third aspect.

The storage medium stores a program. The storage medium includes but is not limited to a volatile memory, for example, a random access memory, or a non-volatile memory, for example, a flash memory, a hard disk drive (hard disk drive, HDD), or a solid state drive (solid state drive, SSD).

According to a ninth aspect, this application provides a computing device program product, where the computing device program product includes computer instructions. When the instructions are executed by a computing device, the computing device may perform the method in the first aspect or any possible implementation of the first aspect, the method in the second aspect or any possible implementation of the second aspect, or the third aspect or any possible implementation of the third aspect. The computer program product may be a software installation package. When the method provided in the first aspect or any possible implementation of the first aspect, the method provided in the second aspect or any possible implementation of the second aspect, or the method provided in the third aspect or any possible implementation of the third aspect needs to be used, the computer program product may be downloaded and executed on the computing device.

For descriptions of effects that can be achieved in any one of or any possible design of the second aspect to the ninth aspect, refer to the technical effects corresponding to the first aspect. Repeated parts are not described.

### BRIEF DESCRIPTION OF DRAWINGS

FIG. 1 is a diagram of cross-chain communication according to an embodiment of this application;
FIG. 2 is another diagram of cross-chain communication according to an embodiment of this application;
FIG. 3 is a diagram of cross-chain communication according to an embodiment of this application;
FIG. 4 is a diagram of a procedure of a data processing method according to an embodiment of this application;
FIG. 5 is a diagram of a transfer procedure of state information of a parallel chain according to an embodiment of this application;
FIG. 6 is a diagram of a control procedure of a control node according to an embodiment of this application;
FIG. 7 is a diagram of a structure of a node according to an embodiment of this application; and
FIG. 8 is a diagram of another structure of a node according to an embodiment of this application.

### DESCRIPTION OF EMBODIMENTS

To facilitate understanding of technical solutions provided in embodiments of this application, some technical terms in embodiments of this application are first described.
(1) A blockchain (blockchain) is a chained data structure obtained by combining data blocks in a chronological order, and is a distributed ledger that is protected against data tampering and forging by using cryptology. The blockchain is based on a peer-to-peer (peer-to-peer, P2P) network. Each P2P network node participating in a transaction (transaction) and block storage, verification, and forwarding is a node on the blockchain, that is, a blockchain node.

A blockchain network may include one or more blockchains, and each blockchain may include a plurality of blockchain nodes. The blockchain node may include a ledger (ledger) instance and a chaincode (chaincode). The ledger instance is used to record a transaction that is in the blockchain network. The chaincode may be referred to as a smart contract (smart contract), and is used by the blockchain node to query the transaction in the ledger instance and a transaction in a newly added ledger instance. There may be one or more chaincodes. The blockchain node may be implemented as various terminals or servers, and is used as a trusted node that is of the smart contract and that can perform a privacy transaction, to synchronize block data in the blockchain network.

Blockchain nodes joining a same blockchain may perform a transaction or share a ledger. One blockchain node may join one or more blockchains. When the blockchain node joins one blockchain, the blockchain node has one ledger. When the blockchain node joins a plurality of blockchains, the blockchain node correspondingly has a plurality of ledgers. Data stored in each blockchain node includes ledger data and state information (state database).

It should be noted that ledger data in a block is data that cannot be tampered with, and state information in a state information base records a result of each transaction. Therefore, transactions may be continuously added to modify the state information, and the state information is data that can be modified. In specific implementation, the state information stored in the state information base may be related data of a latest transaction of a current ledger. In addition, in each transaction execution process, ledger data is not updated, only a "simulated" transaction is performed to obtain a result of the simulated transaction. A related result corresponding to the transaction is synchronized to a corresponding block only when a consensus is reached in the blockchain for the simulated transaction. Then, a blockchain node may obtain a structure from a target block that stores the structure, and write to-be-written data in the structure into a corresponding state information base.

It should be understood that the smart contract is actually executable code stored in the blockchain. Because the smart contract does not necessarily have an actual owner, the smart contract is not an account in a strict sense. However, due to a feature and a behavior of the smart contract, the smart contract can be considered as a machine account controlled by programming logic in many cases. In a broad sense, the smart contract may further include a smart contract programming language, a compiler, a virtual machine, an event, a state machine, a fault tolerance mechanism, and the like.

(2) Verification on integrity and accuracy of blockchain data: For example, the integrity and accuracy of the blockchain data may be verified by using a Merkle tree, or the integrity and accuracy of the blockchain data may be verified by using a Merkle mountain range.

The Merkle tree is a hash (hash) binary tree, and includes a group of leaf nodes, a group of intermediate nodes, and one root node. The leaf node includes storage information or a hash value of the storage information. The intermediate node stores hash values of content of two child nodes of the intermediate node, and the root node at a top layer also stores hash values of content of two child nodes of the root node. After it is determined that new data is added to a discrete data set 1 corresponding to a blockchain 1, a discrete data set 2 is obtained. Then, a Merkle tree 1 corresponding to the discrete data set 1 needs to be reorganized to obtain a Merkle tree 2. Then, the discrete data set 2 is processed based on the Merkle tree 2 to obtain a digest 2, and the discrete data set 2 is verified based on the digest 2.

The Merkle mountain range is of a Merkle tree structure that resembles a group of continuous peaks. The Merkle mountain range has the following advantages: The Merkle mountain range cannot be modified after a node is inserted, and supports dynamic insertion. The foregoing example is still used. To verify accuracy of data in the Merkle mountain range, only a Merkle mountain range A corresponding to the discrete dataset 1 needs to be expanded to obtain a Merkle mountain range B, then the discrete dataset 2 is processed based on the Merkle mountain range B to obtain a digest B, and then the discrete dataset 2 is verified based on the digest B.

(3) Chain crossing refers to an operation of coordinating a plurality of chains and causing impact on the plurality of chains. In other words, an operation of coordinating a plurality of chains and causing impact on the plurality of chains may be considered as chain crossing.

Cross-chain communication or a cross-chain transaction refers to a transaction that needs to be completed by sub-transactions on a plurality of blockchains taking effect together. The sub-transactions that are on the plurality of blockchains and that correspond to the cross-chain transaction succeed or fail at the same time. Chain crossing needs to be implemented by performing the cross-chain transaction, in other words, a cross-chain function needs to be implemented by performing the cross-chain transaction. For example, if a cross-chain transaction on a blockchain A needs to be based on a specific transaction on a blockchain B, the blockchain A needs to perform cross-chain communication.

The cross-chain transaction involves verification of cross-chain state information, and the verification of the cross-chain state information may be referred to as cross-chain state verification for short. The cross-chain state verification can be implemented through a cross-chain state transfer technology. The cross-chain state transfer technology involves cross-chain state transferring and verification. The foregoing example is still used. A state of the blockchain B may be transferred to a smart contract of the blockchain A, so that a user on the blockchain A can implement cross-chain state verification on the blockchain B.

The cross-chain state transfer technology needs the help of a relay node. The relay node may implement interconnection between two networks by resending or forwarding a data signal. The relay node in chain crossing may convert data sent by a blockchain into a data structure that can be identified by another chain, and send a cross-chain instruction to a blockchain by invoking an application programming interface of the blockchain, to coordinate all blockchains participating in a cross-chain transaction.

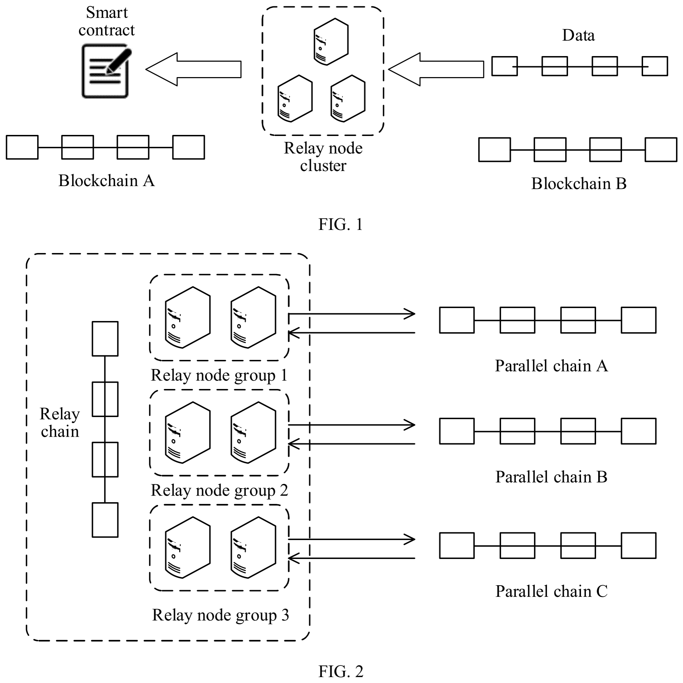

For example, FIG. 1 is a diagram of a cross-chain communication system. The system shown in FIG. 1 includes a blockchain A, a blockchain B, and a relay node cluster. In FIG. 1, an example in which a blockchain 1 includes four blockchain nodes (which may also be referred to as users), and the blockchain B includes four blockchain nodes (which may also be referred to as users) is used. The relay node cluster includes a plurality of relay nodes, and is of a distributed structure. In FIG. 1, an example in which the relay node cluster includes three relay nodes is used. Any relay node may join one or more blockchains to provide cross-chain services. In FIG. 1, the user on the blockchain A needs to perform a cross-chain transaction, and the cross-chain transaction needs a cross-chain state of the blockchain B.

For example, when any user on the blockchain A has a requirement for cross-chain verification, the user may send a request to a relay node in the relay node cluster to obtain block data of the blockchain B. After obtaining all the block data of the blockchain B, the relay node sends the block data to a smart contract of the blockchain A. The smart contract in the blockchain A receives and maintains the block data of the blockchain B. For example, for transaction data in each block on the blockchain B, the smart contract may generate a digest through a Merkle mountain range, and record the digest in block header data. In this way, the smart contract in the blockchain A may verify validity of the transaction data on the blockchain B based on the block header data of the blockchain B, so that cross-chain state verification can be implemented.

However, in the system shown in FIG. 1, the smart contract in the blockchain A needs to receive and maintain all the block data of the blockchain B. This causes very high overheads. In addition, if the blockchain A expects to perform cross-chain transactions with a plurality of blockchains, the blockchain A needs to establish a plurality of cross-chain connections in sequence, and efficiency is low. In addition, the blockchain A needs to maintain all block data of the plurality of blockchains, and overheads are still very high.

Therefore, a cross-chain transaction implemented based on a relay chain technology is proposed. A relay chain is a blockchain that has a same function as a relay node, and is used to implement interconnection between a plurality of blockchains. In a relay chain-based cross-chain communication system, a relay node cluster originally connected to two blockchains may be connected to a plurality of blockchains. In this way, a blockchain only needs to establish a connection to the relay node cluster, and may interact with other n blockchains that establish connections to the relay node cluster, where N is a positive integer. The blockchain that establishes the connection to the relay node cluster is also referred to as a parallel chain.

The relay chain-based cross-chain communication system is equivalent to dividing a relay node cluster in a relay node cluster-based cross-chain communication system into a plurality of relay node groups. One relay node group can be connected to and communicate with one parallel chain. All the relay node groups jointly maintain one relay chain, and each relay node group records a state of a corresponding parallel chain in the relay chain. The relay chain may be broadcast to all parallel chains, and different parallel chains can obtain states of each other by querying the relay chain, to implement cross-chain state transferring.

For example, FIG. 2 is a diagram of a relay chain-based cross-chain communication system. The system shown in FIG. 2 includes a parallel chain A, a parallel chain B, a parallel chain C, and a relay chain. The relay chain includes a relay node group 1 to a relay node group 3, and any parallel chain that establishes a connection to the relay chain may communicate with another parallel chain connected to the relay chain. The parallel chain A is used as an example. The parallel chain A may communicate with the parallel chain B and the parallel chain C through the relay chain. For example, the parallel chain A may send state information to the relay node group 1, and the relay node group 1 records the state information of the parallel chain A in the relay chain. Similarly, the relay node group 2 may record state information of the parallel chain B in the relay chain, and the relay node group 3 may also record state information of the parallel chain C in the relay chain. State information of a plurality of parallel chains is recorded in the relay chain. The relay chain may broadcast the recorded state information to all the parallel chains, so that different parallel chains can obtain data of each other.

Each parallel chain independently sends state information to a corresponding relay node group, and when to report the state information is determined by each parallel chain. The relay chain passively receives the state information from the parallel chain. As a result, delays of reporting state information by different parallel chains may be different. For example, when the state information of the parallel chain A is updated, latest state information may be reported to the relay node group 1 quickly, and when the state information of the parallel chain B is updated, latest state information is reported to the relay node group 2 after a delay. As a result, the state information of the parallel chain recorded in the relay chain may not be the latest, a parallel chain cannot obtain real-time state information of another parallel chain, and it is difficult to ensure transaction timeliness. In addition, the parallel chain and the relay chain are independent of each other, and if the parallel chain or the relay chain are invalid, a cross-chain transaction fails. For example, if the parallel chain unilaterally terminates submission of the state information, the cross-chain transaction fails because the corresponding state information cannot be obtained. In addition, a relay node cluster is divided into a plurality of relay node groups, and a quantity of relay nodes included in each relay node group is reduced. Consequently, difficulty of successfully attacking the relay node group is reduced, and a probability of a cross-chain transaction failure is increased.

To resolve the foregoing problem, a solution in embodiments of this application is provided. In embodiments of this application, a node configured to maintain a relay chain and a node configured to schedule a relay node group may be newly added. It is equivalent to that, from a perspective of functions, nodes are classified into a plurality of types, a type of node is configured to maintain the relay chain, a type of node is used as a node in the relay node group, and a type of node is configured to schedule the node in the relay node group. For ease of description, the node configured to maintain the relay chain is referred to as a block management node, the node configured to schedule the relay node group is referred to as a control node, and the node used as the node in the relay node group is referred to as a receiving node. The control node, the block management node, and the receiving node all belong to a same blockchain system/network, so that the control node, the block management node, and the receiving node can be compatible with a consensus protocol of a current blockchain. In embodiments of this application, a time point at which a parallel chain reports state information may be specified, so that the parallel chain can report the state information in a limited time range. State information of each parallel chain recorded in the relay chain is the latest, and parallel chains may obtain latest state information of each other based on the relay chain, so that a delay of a cross-chain transaction can be reduced. If the relay chain does not obtain state information of a parallel chain in a specified time period, it may be considered that transmission of the state information is interrupted, and the control node may schedule another receiving node to interact with the parallel chain, to resume transferring of the state information.

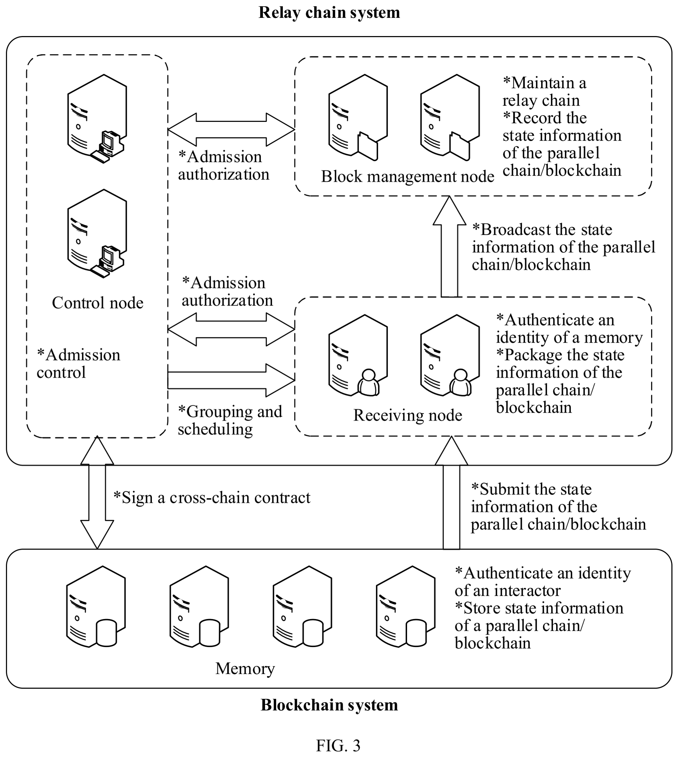

FIG. 3 is a diagram of a system to which a data processing method is applicable according to an embodiment of this application. The system is constructed based on a blockchain, and is also referred to as a blockchain system. The blockchain system includes two types of blockchains. One type of blockchain is a relay chain, and the other type of blockchain is a parallel chain. The data processing system includes a plurality of data nodes and at least one memory, and each memory is configured to store a parallel chain and belongs to a parallel chain system. The plurality of data nodes belong to a same blockchain network, serve as nodes on the blockchain, and belong to a relay chain system.

The plurality of data nodes and the at least one memory have a basic function of a blockchain node. Each node in the data processing system stores data information of the node, and may provide the data information of the node. For any data node, the data node may provide data information of the data node for another data node in the data processing system. For any memory, the memory may provide data information stored in the memory for one or more data nodes. Any data node may obtain a plurality of pieces of data information from the plurality of data nodes and data information of the at least one memory. In this embodiment of this application, an interaction manner between different nodes complies with the interaction manner of the blockchain nodes in the foregoing descriptions. For example, information exchanged between the different nodes may be released to a blockchain network to which the nodes belong, so that all blockchain nodes on the blockchain can obtain the information. In this way, all the blockchain nodes can record the information, and reach a consensus on the information.

The memory may be understood as a distributed node that stores state information of a parallel chain. The memory stores at least the state information of the parallel chain. The state information stored in the memory is updated as the blockchain changes. Optionally, the memory further stores a backup of the state information, and the backup is also updated as the blockchain changes.

The plurality of data nodes belong to the relay chain system. From a perspective of functions, the plurality of data nodes may be classified into three types of entities, for example, a control node, a block management node, and a receiving node. Certainly, the plurality of data nodes may include at least one control node, at least one block management node, and at least one receiving node. The at least one control node, the at least one block management node, and the at least one receiving node all belong to the relay chain system. The at least one block management node jointly maintains one relay chain. It should be noted that the control node, the block management node, and the receiving node are essentially relay nodes. Specific names of the control node, the block management node, and the receiving node are not limited in this embodiment of this application. For example, the control node may also be referred to as a first-type relay node, the block management node may also be referred to as a second-type relay node, and the receiving node may also be referred to as a third-type relay node.

The receiving node is responsible for transferring the state information of the parallel chain to the block management node. The at least one receiving node is grouped into at least one receiving node group. One receiving node group corresponds to one parallel chain. Any receiving node group may be connected to a parallel chain corresponding to the receiving node group, perform authentication on the parallel chain, and interact with the parallel chain. The authentication on the parallel chain includes identity authentication on a memory storing state information of the parallel chain. The memory stores the state information of the parallel chain, and may send the state information stored in the memory to the corresponding receiving node group. Any receiving node group obtains the state information of the parallel chain, and transfers the state information to each block management node. For example, the receiving node group may package the received state information to generate a state event/affair, and broadcast the state event/affair to the at least one block management node.

After obtaining the state information of the parallel chain, the block management node may generate a relay chain block based on the state information, and record the state information on the relay chain. Any block management node may broadcast the relay chain to all nodes, and may obtain state information of each parallel chain from each node in the system.

The control node is configured to control the at least one block management node (or the relay chain), the at least one receiving node, and the parallel chain. For example, the control node may group the at least one receiving node into the at least one receiving node group. For another example, the control node has permission to allow any block management node to join the relay chain system, and also has permission to allow any receiving node to join the relay chain system. Alternatively, any block management node and any receiving node need to be reviewed and authorized by the control node to join the relay chain system. The control node may authorize, in a joint signature manner, a block management node and/or a receiving node that pass/passes the review. It may be considered that all control nodes jointly maintain one identity blockchain. It should be understood that the identity blockchain includes information about the at least one block management node and the at least one receiving node. The control node broadcasts the identity blockchain to all parallel chains, so that each parallel chain can learn of information about all entities on the identity blockchain.

As described above, if the memory independently reports/submits the state information of the parallel chain to the receiving node group, and the receiving node group passively receives the state information from the memory, the state information of each parallel chain stored in the relay chain may not be the latest. Consequently, a parallel chain cannot obtain real-time state information of another parallel chain, and it is difficult to ensure transaction timeliness. "Reporting" and "submission" in this embodiment of this application may be replaced with each other.

To resolve this problem, in this embodiment of this application, it may be specified that each memory submits state information of a parallel chain in a specified time period. The state information of the parallel chain submitted in the specified time period may be considered as latest state information of the parallel chain. For example, the control node may sign, on behalf of the relay chain, a cross-chain contract in a form of a joint signature with any parallel chain that expects to establish a cross-chain connection to the relay chain. The cross-chain contract may indicate the parallel chain to submit state information in the specified time period. In this way, any parallel chain may submit the state information based on the cross-chain contract, so that the relay chain can obtain latest state information of each parallel chain in a limited time period, a delay of passively waiting to receive the state information of the parallel chain can be reduced, and timeliness of a cross-chain transaction can be ensured as much as possible. If the memory does not submit the state information of the parallel chain in the specified time period, it may be considered that transmission of the state information is interrupted. In this case, the control node may schedule another receiving node group to interact with the parallel chain, to resume transferring of the state information.

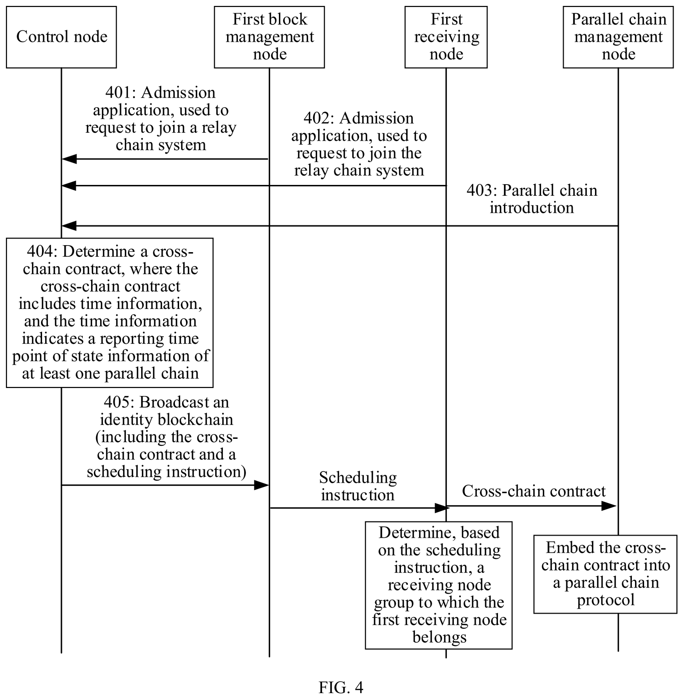

The following first describes a function of the control node with reference to FIG. 4. FIG. 4 is a diagram of a procedure of a data processing method according to an embodiment of this application. In FIG. 4, an example in which the method is performed by a first block management node, a first receiving node, a control node, and a parallel chain management node is used. If there are a plurality of block management nodes and a plurality of receiving nodes, execution steps of all the block management nodes are the same, and execution steps of all the receiving nodes are the same. The method includes the following steps.

Step 401: The first block management node sends an admission application to the control node, and correspondingly, the control node receives the admission application from the first block management node, where the admission application is used to request to join a relay chain system.

The first block management node is a block management node in block management nodes that expect to join the relay chain system. Any block management node that expects to join the relay chain system may send, to the control node, an admission application for requesting to join the relay chain system. The first block management node is used as an example. The admission application sent by the first block management node includes identity information of the first block management node. For example, the admission application includes a qualification certificate of the first block management node. A source of the qualification certificate is not limited in this embodiment of this application. For example, the qualification certificate of the first block management node may be from an identity authentication system. For example, the qualification certificate of the first block management node may be issued by a certificate authority. Alternatively, the qualification certificate of the first block management node may be from another channel. For example, the qualification certificate of the first block management node may be obtained from a technology company, a social platform, or a collaboration tool.

After receiving the admission application of the first block management node, the control node reviews the first block management node based on information carried in the admission application. If the first block management node meets a review condition, the control node allows the first block management node to join the relay chain system, or the control node authorizes the first block management node to join the relay chain system. The control node may record authorization information of the allowed first block management node in a blockchain maintained by the control node. The blockchain is also referred to as an identity blockchain.

Step 402: The first receiving node sends an admission application to the control node, and correspondingly, the control node receives the admission application from the first receiving node, where the admission application is used to request to join the relay chain system.

The first receiving node is a receiving node that expects to join the relay chain system. Any receiving node that expects to join the relay chain system may send, to the control node, an admission application for requesting to join the relay chain system. The first receiving node is used as an example. The admission application sent by the first receiving node includes identity information of the first receiving node. For example, the admission application includes a qualification certificate of the first receiving node. For a source of the qualification certificate of the first receiving node, refer to the foregoing source of the qualification certificate of the first block management node. Details are not described herein again. It should be noted that the source of the qualification certificate of the first receiving node may be the same as or different from the source of the qualification certificate of the first block management node.

After receiving the admission application of the first receiving node, the control node reviews the first receiving node based on information carried in the admission application. If the first receiving node meets the review condition, the control node allows the first receiving node to join the relay chain system, or the control node authorizes the first receiving node to join the relay chain system. Optionally, the control node may authorize, in a joint signature manner, the first block management node and the first receiving node that meet the review condition. Certainly, the control node may also record authorization information of the allowed receiving node in the identity blockchain maintained by the control node.

The control node may further control grouping of a plurality of receiving nodes, to be specific, group the plurality of receiving nodes into n receiving node groups. For example, the control node may send a scheduling instruction to each receiving node, and any receiving node receives the scheduling instruction, and determines, based on the scheduling instruction, a group to which the receiving node is belongs. The scheduling instruction may include identification information of each receiving node group, and identification information of a receiving node included in each receiving node group. The identification information of the receiving node group may include an identity (identity, ID) of the receiving node group, and the identification information of the receiving node may include an internet protocol (internet protocol, IP) address of the receiving node. The control node may broadcast the scheduling instruction. In this way, any receiving node may determine a group to which the receiving node belongs and another receiving node in the group. In addition, any receiving node may communicate with the another receiving node based on an IP address of the another receiving node in the group. In this embodiment of this application, the control node may also record the scheduling instruction in the identity blockchain, so that the control node broadcasts the identity blockchain, to broadcast the scheduling instruction.

Step 403: The parallel chain management node sends a parallel chain introduction to the control node, and correspondingly, the control node receives the parallel chain introduction from the parallel chain management node.

The parallel chain introduction includes information such as public keys, internet protocol (internet protocol, IP) addresses, and qualification certificates of all memories in a parallel chain system. In addition, the parallel chain introduction further includes specification information of the parallel chain, for example, a block format, a block generation speed, and a consensus protocol. For a parallel chain that expects to establish a cross-chain connection to a relay chain, a parallel chain introduction is submitted to the control node by the parallel chain management node. The control node may control the parallel chain based on the information included in the parallel chain introduction.

Step 404: The control node determines a cross-chain contract, where the cross-chain contract includes time information, and the time information indicates a reporting time point of state information of at least one parallel chain.

The control node may determine a maximum delay for reporting state information of each parallel chain. This is equivalent to that the control node may determine a maximum delay for each memory to submit stored state information. The time information may indicate one time point, or include one time point, in other words, reporting time points of all parallel chains may be the same. Alternatively, the time information indicates or includes a plurality of time points, and the plurality of time points indicate reporting time points of state information of one or more parallel chains. In other words, each time point corresponds to one or more parallel chains, and reporting time points of different parallel chains may also be different. State information submitted by a memory within the maximum delay may be considered as latest state information of a parallel chain submitted by the memory. In this way, each memory submits state information of a parallel chain within the maximum delay, to ensure, as much as possible, that state information that is of each parallel chain and that is recorded in the relay chain is the latest. In addition, the cross-chain contract may further specify other information. For example, the cross-chain contract may further specify a specification of a block header data packet generated by packaging the state information by the receiving node. Maximum delays of submitting state information by different memories may be different. In other words, the cross-chain contract includes time points at which a plurality of memories submit state information, and time points at which different memories submit state information may be the same or may be different.

It should be noted that the control node may sign the cross-chain contract before the memory joins a cross-chain protocol. That is, the cross-chain contract is an offline agreement.

Step 405: The control node broadcasts the identity blockchain.

The control node may maintain the identity blockchain. The identity blockchain includes authorization information of each block management node, authorization information of each receiving node, the scheduling instruction, the cross-chain contract, and the like. The control node broadcasts the identity blockchain, to be specific, the control node broadcasts the authorization information of each block management node, the authorization information of each receiving node, the scheduling instruction, the cross-chain contract, and the like. All other nodes that are located in a same blockchain network as the control node may obtain the identity blockchain.

Nodes of different types receive the identity blockchain, and perform different steps based on content included in the identity blockchain.

For example, any receiving node may determine, based on the scheduling instruction included in the identity blockchain, a receiving node group to which the receiving node belongs. Further, a receiving node may also query a memory corresponding to a receiving node group to which the receiving node belongs, and establish a connection to the memory, so that the memory can subsequently submit/report stored state information of a parallel chain to the corresponding receiving node group.

For another example, the parallel chain management node may embed the cross-chain contract included in the identity blockchain into a parallel chain protocol. In this way, any memory in the parallel chain system submits latest state information, that is, submits block header information of a parallel chain to the receiving node based on this contract. Because the cross-chain contract specifies a latest time point at which the memory submits the state information, the memory can submit the state information of the parallel chain in a limited time period, so that the relay chain can obtain latest state information of each parallel chain in the limited time period, a delay of passively waiting to receive the state information reported by the parallel chain can be reduced, and timeliness of a cross-chain transaction can be ensured as much as possible.

If the block management node does not receive, in a time period specified in the cross-chain contract, the state information submitted by the memory, it may be considered that transferring of the state information is interrupted. The interruption may be caused because a receiving node in a corresponding receiving node group is faulty. In this case, the control node may schedule the receiving node group in which the interruption occurs. For example, the control node may disband the receiving node group in which the interruption occurs, and randomly allocate the receiving node included in the receiving node group to another receiving node group. One or more receiving nodes included in the another receiving node group may form a new receiving node group. In this way, an attempt may be made to resume the transferring of the state information through interaction between different receiving nodes and the memory.

For example, there are three receiving node groups in total: a receiving node group 1 to a receiving node group 3. The receiving node group 1 includes a receiving node 1 to a receiving node 3, the receiving node group 2 includes a receiving node 4 to a receiving node 6, and the receiving node group 3 includes a receiving node 7 and a receiving node 8. The receiving node group 1 may receive state information of a parallel chain 1. If the receiving node 2 in the receiving node group 1 is faulty, in other words, the receiving node 2 causes interruption to transferring of the state information of the parallel chain 1, the control node reschedules all the receiving nodes. For example, the control node schedules the receiving node 5, the receiving node 6, and the receiving node 8 to form a new receiving node group 1. In this way, the state information of the parallel chain 1 may be transferred through the receiving node 5, the receiving node 6, or the receiving node 8 in the new receiving node group, to resume the transferring of the state information of the parallel chain 1.

If the transferring of the state information of the parallel chain still cannot be resumed after the control node performs scheduling for a plurality of times, a possibility that the receiving node group is invalid may be excluded. For example, the control node may consider that the parallel chain does not have or rejects to submit the state information. In this case, the control node may mark the parallel chain whose state information fails to be transferred.

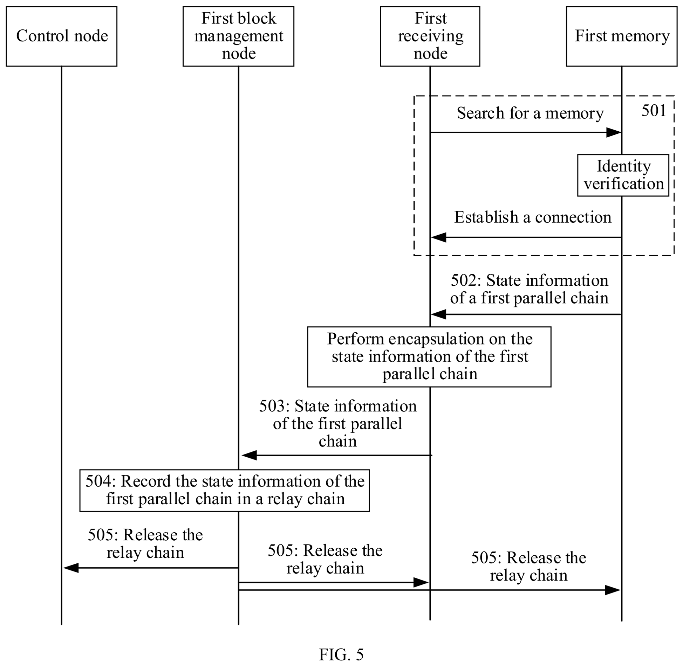

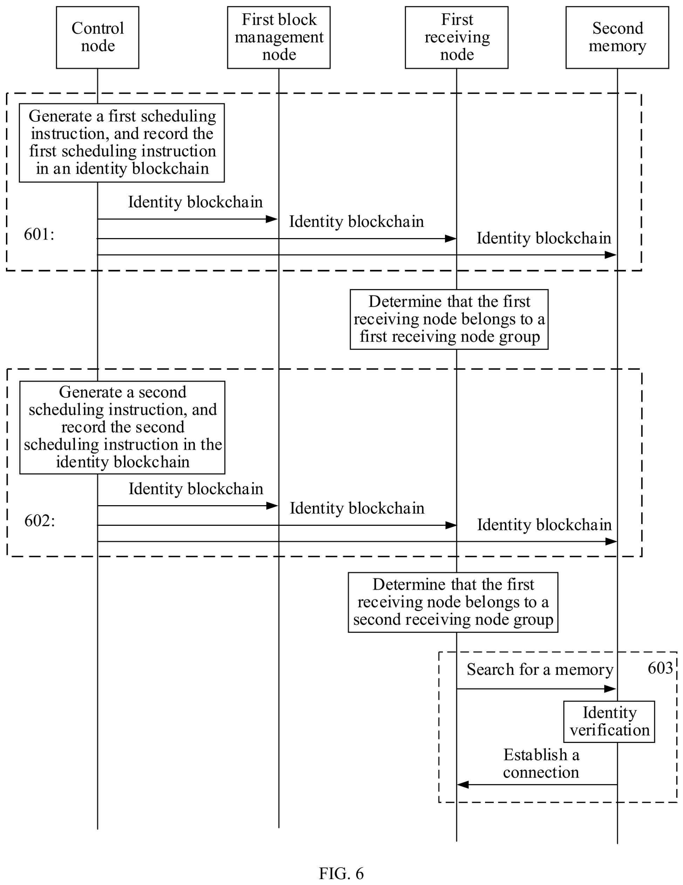

With reference to FIG. 5 and FIG. 6, the following separately describes a transfer procedure of state information of a parallel chain and a procedure of scheduling a receiving node by a control node.

FIG. 5 is a diagram of a transfer procedure of state information of a parallel chain according to an embodiment of this application. In FIG. 5, an example in which the procedure is performed by a first block management node, a first receiving node, a first memory, and a control node is used. If there are a plurality of block management nodes and a plurality of receiving node groups, execution steps of all the block management nodes are the same, and execution steps of all the receiving node groups are the same. The first receiving node initially belongs to a first receiving node group. The method includes the following steps.

Step 501: The first receiving node and the first memory establish a connection, and perform mutual identity verification based on an identity blockchain.

The first receiving node may search for a memory that joins a blockchain system, for example, the first memory. Then, the first receiving node and the first memory may perform mutual identity verification based on authorization information that is of each receiving node and the memory, that is included in the identity blockchain, and that is obtained from the control node. If identity verification on the first memory by the first receiving node succeeds, the first receiving node may request to establish a connection to the first memory. If identity verification on the first receiving node by the first memory succeeds, the first memory establishes a connection to the first receiving node. It should be noted that, similar to the first receiving node, each receiving node in a receiving node group may search for a memory corresponding to a parallel chain, and perform mutual identity verification with a found memory. Subsequently, after the identity verification succeeds, the receiving node may establish a connection to the memory.

Step 502: The first memory submits state information of a first parallel chain to the first receiving node, and correspondingly, the first receiving node receives the state information of the first parallel chain from the first memory.

The first memory collects and stores state information of a corresponding parallel chain (for example, the first parallel chain), that is, parallel chain block information. The first memory may send the state information of the first parallel chain to any receiving node (for example, the first receiving node) in a receiving node group corresponding to the first parallel chain. The first memory may submit the obtained state information of the first parallel chain to the first receiving node before a reporting time point that is of the state information of the first parallel chain and that is specified in a cross-chain contract. In this case, the state information of the first parallel chain submitted by the first memory may be considered as latest state information of the first parallel chain.

Step 503: The first receiving node broadcasts the state information of the first parallel chain.

After obtaining the state information of the first parallel chain from the first memory, the first receiving node verifies correctness of the state information based on a block header of the first parallel chain. For successfully verified state information, a receiving node may re-encapsulate/package the state information. For example, the first receiving node may perform encapsulation and joint signature on the state information of the first parallel chain by using a Merkle mountain range data structure, to generate a block header data packet, where the data packet includes the state information of the first parallel chain. Then, the first receiving node broadcasts the state information of the first parallel chain to the first block management node. It should be noted that receiving nodes in a receiving node group may communicate with each other. In a possible implementation, after obtaining the state information of the first parallel chain from the first memory, the first receiving node may send the state information of the first parallel chain to a second receiving node in the first receiving node group, and the second receiving node broadcasts the state information of the first parallel chain. That a receiving node broadcasts state information of a parallel chain may also be understood as that a receiving node group to which the receiving node belongs broadcasts the state information of the parallel chain.

Step 504: The first block management node records the state information of the first parallel chain in a relay chain.

The first block management node may receive state information of parallel chains that is separately broadcast by a plurality of receiving node groups. If one receiving node group corresponds to one parallel chain, the first block management node may obtain state information of at least one parallel chain. The first block management node may record the obtained state information of the at least one parallel chain in the relay chain, so that any node in a blockchain network can obtain the state information of the at least one parallel chain from the relay chain.

Step 505: The first block management node releases the relay chain to each node in the blockchain network.

The first block management node may release the maintained relay chain to each node in the blockchain network, so that each node can obtain corresponding information from the relay chain. For example, different parallel chains may obtain state information of each other by querying the relay chain, to implement cross-chain information transferring.

FIG. 6 is a diagram of a control procedure of a control node according to an embodiment of this application. In FIG. 6, an example in which the procedure is performed by a first block management node, a first receiving node group, a first memory, and a control node is used. If there are a plurality of block management nodes and a plurality of receiving node groups, execution steps of all the block management nodes are the same, and execution steps of all the receiving node groups are the same. A first receiving node initially belongs to the first receiving node group. The method includes the following steps.

Step 601: The control node generates a first scheduling instruction, and releases an identity blockchain, where the identity blockchain includes the first scheduling instruction, and the first scheduling instruction is used to group a plurality of receiving nodes.

The control node may group the plurality of receiving nodes. For example, the control node may send the first scheduling instruction to each receiving node through the identity blockchain. Any receiving node receives the first scheduling instruction, and determines, based on the first scheduling instruction, a group to which the receiving node belongs. For example, the first receiving node is allocated to the first receiving node group.

Step 602: The control node generates a second scheduling instruction, and releases the identity blockchain, where the identity blockchain includes the second scheduling instruction, and the second scheduling instruction is used to regroup the first receiving node group.

The control node may regroup a receiving node group in which interruption occurs, or the control node may regroup a plurality of receiving node groups. For example, if the control node determines that state information of a parallel chain or some parallel chains fails to be transferred, the control node may regroup the plurality of receiving nodes. For example, the control node may periodically query whether state information of each parallel chain is recorded in a relay chain in a time period specified in a cross-chain contract. If state information of a parallel chain is not recorded in the relay chain in the time period specified in the cross-chain contract, it is considered that transferring of the state information of the parallel chain is interrupted. In this case, the control node may regroup the plurality of receiving nodes.

For a parallel chain in which state information transferring is interrupted, the control node may generate a new scheduling instruction, where the scheduling instruction may be used to regroup a receiving node group corresponding to the parallel chain. That state information of a first parallel chain is interrupted is used as an example. The control node may regroup the first receiving node group. For example, the control node may generate the second scheduling instruction, where the second scheduling instruction is used to regroup the first receiving node group. The control node records the second scheduling instruction in the identity blockchain, and the control node broadcasts the identity blockchain. Each receiving node may obtain the identity blockchain, and may determine, based on the second scheduling instruction, the group to which the receiving node belongs. For example, the second scheduling instruction indicates that the first receiving node belongs to a second receiving node group. The first receiving node receives the second scheduling instruction, and determines that the first receiving node changes from originally belonging to the first receiving node group to belonging to the second receiving node group.

Step 603: The first receiving node determines a second memory based on the second scheduling instruction, and establishes a connection to the second memory.

The original first receiving node group corresponds to the parallel chain in which state information transferring is interrupted. The second scheduling instruction enables the receiving node included in the original first receiving node group to change. After the original first receiving node group receives the second scheduling instruction, the included receiving node is determined based on the second scheduling instruction, and a regrouped/updated first receiving node group is formed. The regrouped/updated first receiving node group searches for a memory corresponding to the parallel chain, that is, the first memory. Then, each receiving node in the regrouped/updated first receiving node group performs mutual identity verification with the first memory. After the identity verification succeeds, the regrouped first receiving node group establishes a connection to the first memory.

The first receiving node may be reallocated to the second receiving node group, and may re-search for a memory (for example, the second memory) corresponding to the parallel chain. Then, each receiving node in the second receiving node group performs mutual identity verification with the second memory. After the identity verification succeeds, the second receiving node group establishes a connection to the second memory.

The control node schedules the receiving node group in which the interruption occurs, so that an attempt can be made to resume the interrupted transferring of the state information through interaction between different receiving nodes and the memory. If the transferring of the state information of the parallel chain still cannot be resumed after the control node performs scheduling for a plurality of times, a possibility that the receiving node group is invalid may be excluded. For example, the control node may consider that the parallel chain does not have or rejects to submit the state information. In this case, the control node may mark the parallel chain whose state information fails to be transferred. In this way, a faulty parallel chain can be found in time through marking, to avoid a failure of a cross-chain transaction caused by the parallel chain unilaterally terminating submission of state information.

In this embodiment of this application, a time point at which the parallel chain reports the state information is specified, so that the parallel chain can report the state information in a limited time range. State information of each parallel chain recorded in the relay chain is latest, so that a delay of the cross-chain transaction can be reduced. If the relay chain does not obtain state information of a parallel chain in a specified time period, it may be considered that transmission of the state information is interrupted, and the control node may schedule another receiving node to interact with the parallel chain, to resume transferring of the state information.

In embodiments provided in this application, the method provided in embodiments of this application is described from a perspective of interaction between a control node, a block management node, a receiving node, and a memory. To implement functions in the method provided in the foregoing embodiments of this application, a terminal apparatus and a network apparatus may include a hardware structure and/or a software module, and the foregoing functions are implemented in a form of the hardware structure, the software module, or a combination of the hardware structure and the software module. Whether a function in the foregoing functions is performed by using the hardware structure, the software module, or the combination of the hardware structure and the software module depends on specific applications and design constraints of the technical solutions.

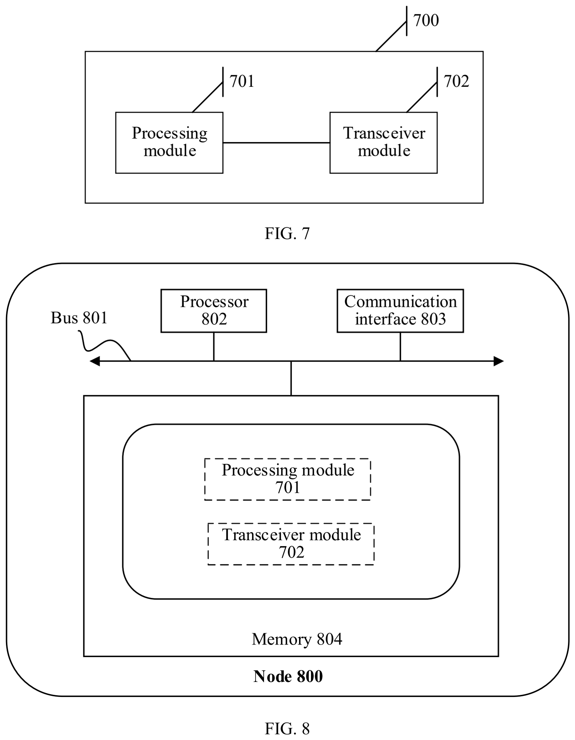

For example, an embodiment of this application further provides a node 700. The node 700 may implement functions of the control node, the first receiving node, or the first block management node in one or more of FIG. 4 to FIG. 6. As shown in FIG. 7, the node 700 includes a processing module 701 and a transceiver module 702. Optionally, the node 700 may further include a storage module, which is not shown in FIG. 7.

For example, the node 700 implements functions of the control node in one or more of FIG. 4 to FIG. 6. The processing module 701 is configured to determine a cross-chain contract, where the cross-chain contract includes time information, the time information indicates a reporting time point of state information of at least one parallel chain, and one parallel chain is a blockchain that establishes a connection to one receiving node group. The transceiver module 702 is configured to broadcast the cross-chain contract.

In an optional implementation, the time information includes one time point, or the time information includes a plurality of time points, and each time point corresponds to one or more parallel chains. Alternatively, the time information indicates one time point, or the time information indicates a plurality of time points, and the plurality of time points indicate reporting time points of state information of one or more parallel chains.

In an optional implementation, the transceiver module 702 is further configured to receive information about the at least one parallel chain; and the processing module 701 is specifically configured to determine the cross-chain contract based on the information about the at least one parallel chain.

In an optional implementation, the transceiver module 702 is further configured to broadcast a first scheduling instruction, where the first scheduling instruction is used to group a receiving node in a blockchain system.

In an optional implementation, the processing module 701 is configured to determine that state information on a relay chain does not include state information of a first parallel chain, where a reporting time point of the state information on the relay chain meets the cross-chain contract; and the transceiver module 702 is configured to broadcast a second scheduling instruction, where the second scheduling instruction is used to regroup a receiving node group corresponding to the first parallel chain.

In an optional implementation, the transceiver module 702 is further configured to receive an admission application sent by a first receiving node, where the admission application is used to request to join a relay chain system; and the processing module 701 is further configured to: allow the first receiving node to join the relay chain system, and record authorization information of the first receiving node.

In an optional implementation, the transceiver module 702 is further configured to receive an admission application sent by a first block management node, where the admission application is used to request to join the relay chain system; and the processing module 701 is further configured to: allow the first block management node to join the relay chain system, and record authorization information of the first block management node.

For example, the node 700 implements functions of the block management node in one or more of FIG. 4 to FIG. 6. The transceiver module 702 is configured to: receive a cross-chain contract from the control node, and receive state information of a plurality of parallel chains, where the cross-chain contract includes time information, the time information indicates a reporting time point of state information of at least one parallel chain, and one parallel chain is a blockchain that establishes a connection to one receiving node group. The processing module 701 is configured to record the state information of the at least one parallel chain in a relay chain, where the reporting time point of the state information of the at least one parallel chain meets the cross-chain contract. The transceiver module 702 is further configured to broadcast the relay chain.

In an optional implementation, the transceiver module 702 is further configured to: send an admission application to the control node, where the admission application is used to request to join the relay chain system; and receive authorization information sent by the control node to allow the node 700 to join the relay chain system.

For example, the node 700 implements functions of the receiving node in one or more of FIG. 4 to FIG. 6. The transceiver module 702 is configured to receive a cross-chain contract from a control node, where the cross-chain contract includes time information, the time information indicates a reporting time point of state information of at least one parallel chain, and one parallel chain is a blockchain that establishes a connection to one receiving node group. The transceiver module 702 is configured to receive state information of a first parallel chain, and the first parallel chain is a blockchain that establishes a connection to a first receiving node group to which a first receiving node belongs. The processing module 701 is configured to determine that a submission time point of the state information of the first parallel chain meets the time information included in the cross-chain contract. The transceiver module 702 is further configured to broadcast the state information corresponding to the first parallel chain.

In an optional implementation, the transceiver module 702 is further configured to: send an admission application to the control node, where the admission application is used to request to join the relay chain system; and receive authorization information that is sent by the control node and that is used by the first receiving node to allow the node 700 to join the relay chain system.

In an optional implementation, the transceiver module 702 is further configured to receive a first scheduling instruction broadcast by the control node, where the first scheduling instruction is used to group a receiving node in the blockchain system; and the processing module 701 is further configured to determine, based on the first scheduling instruction, that the first receiving node belongs to the first group of receiving nodes.

In an optional implementation, the transceiver module 702 is further configured to receive a second scheduling instruction broadcast by the control node, where the second scheduling instruction is used to regroup the first receiving node group; and the processing module 701 is further configured to determine, based on the second scheduling instruction, to establish a connection to a memory corresponding to a second receiving node group, where the node 700 changes from originally belonging to the first receiving node group to belonging to the second receiving node group.

In the foregoing description, module division in the node 700 is performed from a perspective of functions. During specific application, the module division in the node 700 may be further performed in another manner. A module division manner is not limited in this embodiment of this application. Regardless of a division manner, the node 700 has functions of the modules mentioned above. A specific form of each module in the node 700 is not limited in this embodiment of this application. Each module in the node 700 may exist in a form of software. For example, the processing module 701 may be an application deployed on the node 700, and the transceiver module 702 may be a microservice established on the data node 700. Specific forms of the modules in the node 700 listed above are merely examples.

Division into modules in this embodiment of this application is an example, is only logical function division, and may be other division during actual implementation. In addition, function modules in embodiments of this application may be integrated into one processor, or each of the modules may exist alone physically, or two or more modules may be integrated into one module. The integrated module may be implemented in a form of hardware, or may be implemented in a form of a software function module.

If the integrated module is implemented in a form of a software function module and is sold or used as an independent product, the integrated module may be stored in a computer-readable storage medium. Based on such an understanding, the technical solutions of this application essentially, or the part contributing to the conventional technology, or all or a part of the technical solutions may be embodied in a form of a software product. The computer software product is stored in a storage medium, and includes several instructions for instructing a terminal device (which may be a personal computer, a mobile phone, a network device, or the like) or a processor (processor) to perform all or some steps of the method in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

This application further provides a node 800 shown in FIG. 8. The node 800 includes a bus 801, a processor 802, a communication interface 803, and a memory 804. The processor 802, the memory 804, and the communication interface 803 communicate with each other through the bus 801.

The processor 802 may be a central processing unit (central processing unit, CPU). The memory 804 may include a volatile memory (volatile memory), for example, a random access memory (random access memory, RAM). The memory 804 may further include a non-volatile memory (non-volatile memory), for example, a read-only memory (read-only memory, ROM), a flash memory, an HDD, or an SSD. The memory stores executable code, and the processor 802 performs the method described in one or more of FIG. 4 to FIG. 6. The memory 804 may further include another software module (for example, a plurality of modules in the node 700, such as a processing module 701 and/or a transceiver module 702) required for a running process, such as an operating system. The operating system may be LINUX^{™}, UNIX^{™}, WINDOWS^{™}, or the like.

This application further provides a system. The system includes at least one node 800 shown in FIG. 8. The at least one node 800 in a computing device system performs communication by using a communication path. The at least one node 800 in the system establishes communication by using a communication network, and any one or more modules of the node 700 run on each node 800.

The foregoing descriptions of procedures corresponding to the accompanying drawings have respective focuses. For a part of a procedure that is not described in detail, refer to related descriptions of another procedure.

All or some of the foregoing embodiments may be implemented by using software, hardware, firmware, or any combination thereof. When the software is used to implement embodiments, all or a part of embodiments may be implemented in a form of a computer program product. The computer program product includes computer program instructions. When the computer program instructions are loaded and executed on a computer, the procedures or functions according to one or more of FIG. 4 to FIG. 6 in embodiments of the present invention are all or partially generated.

The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk drive, or a magnetic tape), an optical medium (for example, a DVD), or a semiconductor medium (for example, an SSD).

In embodiments of this application, unless otherwise specified, a quantity of a noun indicates "a singular noun or a plural noun", namely, "one or more". "At least one" means one or more, "at least one group" means one or more groups, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. For example, A/B indicates A or B. "At least one of the following items (pieces)" or a similar expression thereof means any combination of these items, including a single item (piece) or any combination of a plurality of items (pieces). For example, at least one of a, b, or c may represent: a, b, c, a and b, a and c, b and c, or a, b, and c, where a, b, and c may be singular or plural.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A data processing method, applied to a control node in a blockchain system, wherein the blockchain system further comprises at least one receiving node group, one receiving node group comprises at least one receiving node, and the method comprises:
determining, by the control node, a cross-chain contract, wherein the cross-chain contract comprises time information, the time information indicates a reporting time point of state information of at least one parallel chain, and one parallel chain is a blockchain that establishes a connection to one receiving node group; and
broadcasting, by the control node, the cross-chain contract.

2. The method according to claim 1, wherein the time information indicates one time point, or the time information indicates a plurality of time points, and the plurality of time points indicate reporting time points of state information of one or more parallel chains.

3. The method according to claim 1 or 2, wherein determining, by the control node, the cross-chain contract comprises:
receiving, by the control node, information about the at least one parallel chain; and
determining, by the control node, the cross-chain contract based on the information about the at least one parallel chain.

4. The method according to claim 1 or 2, wherein the method further comprises:
broadcasting, by the control node, a first scheduling instruction, wherein the first scheduling instruction is used to group a receiving node in the blockchain system.

5. The method according to claim 4, wherein the method further comprises:
determining, by the control node, that state information on a relay chain does not comprise state information of a first parallel chain, wherein a reporting time point of the state information on the relay chain meets the time information comprised in the cross-chain contract; and
broadcasting, by the control node, a second scheduling instruction, wherein the second scheduling instruction is used to regroup a receiving node group corresponding to the first parallel chain.

6. The method according to any one of claims 1 to 5, wherein the method further comprises:
receiving, by the control node, an admission application sent by a first receiving node, wherein the admission application is used to request to join a relay chain system, and the first receiving node is any receiving node in the blockchain system; and
allowing, by the control node, the first receiving node to join the relay chain system, and recording authorization information of the first receiving node.

7. The method according to any one of claims 1 to 6, wherein the blockchain system further comprises at least one block management node, the block management node is configured to manage obtained state information of a parallel chain, and the method further comprises:
receiving, by the control node, an admission application sent by a first block management node, wherein the admission application is used to request to join a relay chain system, and the first block management node belongs to the at least one block management node; and
allowing, by the control node, the first block management node to join the relay chain system, and recording authorization information of the first block management node.

8. A data processing method, applied to a block management node in a blockchain system, wherein the blockchain system further comprises a control node and at least one receiving node group, one receiving node group comprises at least one receiving node, and the method comprises:
receiving, by the block management node, a cross-chain contract from the control node, wherein the cross-chain contract comprises time information, the time information indicates a reporting time point of state information of at least one parallel chain, and one parallel chain is a blockchain that establishes a connection to one receiving node group;
receiving, by the block management node, state information of a plurality of parallel chains that is reported by the at least one receiving node; and
recording, by the block management node, state information of at least one target parallel chain in the state information of the plurality of parallel chains in a relay chain, and broadcasting the relay chain, wherein a reporting time point of the state information of the at least one target parallel chain meets the time information comprised in the cross-chain contract.

9. The method according to claim 8, wherein the method further comprises:
sending, by the block management node, an admission application to the control node, wherein the admission application is used to request to join a relay chain system; and
receiving, by the block management node, authorization information sent by the control node to allow the block management node to join the relay chain system.

10. A data processing method, applied to any receiving node in a blockchain system, wherein the blockchain system comprises a control node and at least one receiving node group, one receiving node group comprises at least one receiving node, and the method comprises:
receiving, by the receiving node, a cross-chain contract from the control node, wherein the cross-chain contract comprises time information, the time information indicates a reporting time point of state information of at least one parallel chain, and one parallel chain is a blockchain that establishes a connection to one receiving node group;
receiving, by the receiving node, state information of a first parallel chain, wherein the first parallel chain is a blockchain that establishes a connection to a first receiving node group to which the receiving node belongs; and
broadcasting the state information of the first parallel chain if the state information of the first parallel chain meets the time information comprised in the cross-chain contract.

11. The method according to claim 10, wherein the method further comprises:
sending, by the receiving node, an admission application to the control node, wherein the admission application is used to request to join a relay chain system; and
receiving, by the receiving node, authorization information sent by the control node to allow the first receiving node to join the relay chain system.

12. The method according to claim 10 or 11, wherein the method further comprises:
receiving, by the receiving node, a first scheduling instruction broadcast by the control node, wherein the first scheduling instruction is used to group a receiving node in the blockchain system; and
determining, by the receiving node, based on the first scheduling instruction, that the first receiving node belongs to the first receiving node group.

13. The method according to claim 12, wherein the method further comprises:
receiving, by the receiving node, a second scheduling instruction broadcast by the control node, wherein the second scheduling instruction is used to regroup the receiving node group; and
determining, by the receiving node based on the second scheduling instruction, to establish a connection to a memory corresponding to a second receiving node group, wherein the receiving node changes from originally belonging to the first receiving node group to belonging to the second receiving node group.

14. A node, wherein the node is deployed in a blockchain system, the blockchain system further comprises at least one receiving node group, one receiving node group comprises at least one receiving node, and the node comprises:
a processing module, configured to determine a cross-chain contract, wherein the cross-chain contract comprises time information, the time information indicates a reporting time point of state information of at least one parallel chain, and one parallel chain is a blockchain that establishes a connection to one receiving node group; and
a transceiver module, configured to broadcast the cross-chain contract.

15. The node according to claim 14, wherein the time information indicates one time point, or the time information indicates a plurality of time points, and the plurality of time points indicate reporting time points of state information of one or more parallel chains.

16. The node according to claim 14 or 15, wherein the transceiver module is further configured to receive information about the at least one parallel chain; and
the processing module is specifically configured to determine the cross-chain contract based on the information about the at least one parallel chain.

17. The node according to claim 14 or 15, wherein the transceiver module is further configured to:
broadcast a first scheduling instruction, wherein the first scheduling instruction is used to group a receiving node in the blockchain system.

18. The node according to claim 17, wherein the processing module is configured to determine that state information on a relay chain does not comprise state information of a first parallel chain, wherein a reporting time point of the state information on the relay chain meets the time information comprised in the cross-chain contract; and
the transceiver module is further configured to broadcast a second scheduling instruction, wherein the second scheduling instruction is used to regroup a receiving node group corresponding to the first parallel chain.

19. The node according to any one of claims 14 to 18, wherein the transceiver module is further configured to receive an admission application sent by a first receiving node, wherein the admission application is used to request to join a relay chain system, and the first receiving node belongs to the at least one receiving node in the blockchain system; and
the processing module is further configured to: allow the first receiving node to join the relay chain system, and record authorization information of the first receiving node.

20. The node according to any one of claims 14 to 19, wherein the blockchain system further comprises at least one block management node; the transceiver module is further configured to receive an admission application sent by a first block management node, wherein the admission application is used to request to join a relay chain system, and the first block management node belongs to the at least one block management node; and
the processing module is further configured to: allow the first block management node to join the relay chain system, and record authorization information of the first block management node.

21. A node, wherein the node is deployed in a blockchain system, the blockchain system further comprises a control node and at least one receiving node group, one receiving node group comprises at least one receiving node, and the node comprises a processing module and a transceiver module;
the transceiver module is configured to: receive a cross-chain contract from the control node, and receive state information of a plurality of parallel chains, wherein the cross-chain contract comprises time information, the time information indicates a reporting time point of state information of at least one parallel chain, and one parallel chain is a blockchain that establishes a connection to one receiving node group;
the processing module is configured to record the state information of the at least one parallel chain in a relay chain, wherein the reporting time point of the state information of the at least one parallel chain meets the cross-chain contract; and
the transceiver module is further configured to broadcast the relay chain.

22. The node according to claim 21, wherein the transceiver module is further configured to:
send an admission application to the control node, wherein the admission application is used to request to join a relay chain system; and
receive authorization information sent by the control node to allow the first block management node to join the relay chain system.

23. A node, wherein the node is deployed in a blockchain system, the blockchain system further comprises a control node, the node belongs to a first receiving node group, and the node comprises a processing module and a transceiver module;
the transceiver module is configured to receive a cross-chain contract from the control node, wherein the cross-chain contract comprises time information, the time information indicates a reporting time point of state information of at least one parallel chain, and one parallel chain is a blockchain that establishes a connection to one receiving node group;
the processing module is configured to receive state information of a first parallel chain, wherein the first parallel chain is a blockchain that establishes a connection to the first receiving node group to which the receiving node belongs; and
the transceiver module is further configured to broadcast the state information of the first parallel chain when the state information of the first parallel chain meets the time information comprised in the cross-chain contract.

24. The node according to claim 23, wherein the transceiver module is further configured to:
send an admission application to the control node, wherein the admission application is used to request to join a relay chain system; and
receive authorization information sent by the control node to allow the first receiving node to join the relay chain system.

25. The node according to claim 23 or 24, wherein the transceiver module is further configured to receive a first scheduling instruction broadcast by the control node, wherein the first scheduling instruction is used to group a receiving node in the blockchain system; and
the processing module is further configured to determine, based on the first scheduling instruction, that the first receiving node belongs to the first group of receiving nodes.

26. The node according to claim 25, wherein the transceiver module is further configured to receive a second scheduling instruction broadcast by the control node, wherein the second scheduling instruction is used to regroup the first receiving node group; and
the processing module is further configured to determine, based on the second scheduling instruction, to establish a connection to a memory corresponding to a second receiving node group, wherein the node changes from originally belonging to the first receiving node group to belonging to the second receiving node group.

27. A blockchain system, wherein the blockchain system comprises a control node, at least one receiving node group, and at least one block management node, and one receiving node group comprises at least one receiving node;
the control node is configured to perform the method according to any one of claims 1 to 7;
any one of the at least one receiving node is configured to perform the method according to claim 8 or 9; and
any one of the at least one block management node is configured to perform the method according to any one of claims 10 to 13.

28. A node, wherein the node comprises a processor and a memory;
the memory is configured to store computer program instructions; and
the processor is configured to: invoke and execute the computer program instructions in the memory, so that the method according to any one of claims 1 to 13 is implemented.

29. A computer-readable storage medium, wherein the computer-readable storage medium stores computer program instructions, and when the computer program instructions are executed by a computing device, the method according to any one of claims 1 to 13 is implemented.
